Europäisches Patentamt

European Patent Office

Office européen des brevets

(11) Publication number: **0 092 191**
A2

## (12) EUROPEAN PATENT APPLICATION

(21) Application number: 83103645.4

(22) Date of filing: 15.04.83

(51) Int. Cl.³: **G 01 H 3/00**

(30) Priority: 19.04.82 US 369423
19.04.82 US 369370
16.07.82 US 398817
19.07.82 US 399845
16.07.82 US 398816

(43) Date of publication of application: 26.10.83
Bulletin 83/43

(84) Designated Contracting States: DE FR GB NL

(71) Applicant: GENERAL ELECTRIC COMPANY, 1 River Road, Schenectady New York 12305 (US)

(72) Inventor: Flax, Stephen Wayne, 219 Wilbur Avenue, Waukesha Wisconsin 53186 (US)
Inventor: Pelc, Norbert Joseph, 6624 West Garfield Avenue, Wauwatosa Wisconsin 53211 (US)
Inventor: Glover, Gary Harold, S28 W29280 Jarmon Road, Waukesha Wisconsin 53186 (US)
Inventor: Riley, James Kenneth, 3400 Ramada Drive, Shingle Springs California 95682 (US)

(74) Representative: Voigt, Reinhard, Dipl.-Ing. European Patent Attorney et al, Kaiserstrasse 41, D-6000 Frankfurt (Main) 1 (DE)

(54) Method and means for determining ultrasonic wave attenuation in tissue.

(57) Ultrasonic wave attenuation in an object is determined from the number of zero crossings of a plurality reflected signal as a function of depth. The zero crossing density is indicative of the frequency spectrum, and by comparing the zero crossing density at one level to the zero crossing density at asecond level a measure of attenuation therebetween is obtained. A time gain control signal for a variable gain amplifier is based on the cumulative attenuation of the signal through the object. Attenuation between a first depth and a second depth is determined from a comparison of the averaged measure at the first depth and the averaged measure at the second depth. The ultrasonic wave is directed through a plurality of limited volumes of the object along a plurality of vectors. The frequency shift of reflections of the ultrasonic wave along each vector determines a measure of the attenuation. The attenuation of each limited volume from each vector intersecting the limited volumes is averaged. Frequency dependent scatter perturbations are identified and eliminated form the measured frequency. Apparatus for implementing the method comprises a zero crossing detector such as a Schmitt triggered monostable multivibrator and a pulse counter.

EP 83 103 645.4

10186-15UL-2208 et al

1

Description

## METHOD AND MEANS FOR DETERMINING ULTRASONIC WAVE ATTENUATION IN TISSUE

This invention relates generally to ultrasonic diagnostic systems, and more particularly the invention relates to a method and means for determining frequency dependent ultrasonic wave attenuation in tissue by time domain analysis.

Ultrasonic diagnostic systems are known and commercially available for medical diagnostic purposes. See for example U.S. Patent No. 4,172,386 for "Video A-Trace Display System for Ultrasonic Diagnostic System" and U.S. Patent No. 4,204,433 for "Computerized Ultrasonic Scanner with Technique Select". The commercially available Datason ultrasound system of General Electric Company provides both real time and static images on a television display.

Briefly, such systems utilize sound transducers to transmit ultrasonic waves (e.g. on the order of several megahertz) into a patient and to receive reflected signals. By analyzing the reflected signals a quantitative assessment of physical tissue parameters can be obtained. Such parameters include frequency dependent signal attenuation, time of flight, signal scatter and refractive effects. While medical diagnosis through ultrasound signal analysis has been successful, physiological variations and sample errors problems limit the accuracy of the measurements.

In one mode of operation, the transducer is attached to a plurality of hinged arms for movement in a single plane, and potentiometers associated with the hinged arms produce signals which identify the transducer position. Alternatively, a transducer array or a hand held transducer can be used. The echo signals are applied to a time gain compensated amplifier to adjust the echo signals for attenuation in passing through the patient. The adjusted signals are then passed through an analog to digital conversion and video processing circuitry and thence to scan converter circuitry for display formatting. The display comprises a plurality of pixels in horizontal rows and vertical columns with each pixel having a brightness level in response to the input signal. Conventionally, the brightness is defined by a 32 level Gray-scale, hence the pixel brightness level requires a five bit digital code.

Heretofore, the control signal for the time gain compensated (TGC) amplifier has been established by adjusting the time gain control signal until the output of the amplifier is approximately flat. This necessarily assumes that attenuation through the tissue under examination is generally uniform. However, the attenuation and signal scatter usually will vary in tissue, and the TGC signal based on an average response will necessarily be biased.

Tissue attenuation of ultrasonic energy in the range of one to ten megahertz is found to be approximately a linear function of frequency and depth and is normally expressed dimensionally in db's/cm/mhz. Different tissues and different lesions within a given tissue tend to have different attenuation coefficients, thus each can be characterized by determining this coefficient.

Heretofore, the attenuation coefficient has been usually measured directly by obtaining a signal sample at two different depths within the tissue and then taking and comparing the Fourier transform of the signals. Theoretically, the frequency dependence of the attenuation function is obtained by dividing one spectrum by the other. In practice, however, the spectrum obtained from the tissue scatter produces a noisy spectrum, and the spectrum or frequency shift is usually estimated. Further, the spectral estimates are difficult to make since if a sample is too short the spectral resolution is limited and if the sample is too long a spectral smearing occurs since the spectrum is changing with depth. Thus, the frequency dependent attenuation coefficient for tissue has been a limited and difficult measurement.

An object of the present invention is an improved method of determining frequency dependent coefficient of attenuation of ultrasonic energy in tissue.

Another object of the invention is apparatus for use in determining tissue attenuation coefficients which is simple, reliable, and inexpensive.

Another object of the present invention is an improved method of establishing a time gain control signal for a time gain compensated amplifier by using measurements of attenuation at various depths in tissue under examination.

Another object of the invention is means for use with ultrasonic scanning apparatus for establishing a more accurate time gain control signal therefor.

4

A feature of the invention is the use of zero crossings of a reflected signal in a region for predicting the signal frequency spectrum in the region. By counting the zero crossings of a reflected ultrasonic signal for different levels in tissue under examination and then comparing the zero crossing density at one level to the zero crossing density at a second level, the attenuation of the tissue between the two levels can be ascertained. The use of zero crossing density to derive an attenuation value produces an estimate thereof since any single measure of zero crossing density for a finite sample interval will necessarily have a variance associated therewith. Normally, the variance of a sample can be reduced by increasing the sample interval such as described by Flax et al in "Statistical Evaluation of the Doppler Ultrasonic Blood Flow Meter", ISA Transactions, Vol. 10, No. 1.

However, the zero crossing density of a reflected ultrasonic wave is not a constant but actually decreases with depth due to attenuation. Thus, a statistical improvement can be obtained only by averaging the zero crossing density from several independent vectors through the tissue being quantified.

Another object of the invention is apparatus for accumulating a measure of frequency such as zero crossing density data and providing an average value thereof.

A sampling of zero crossings along a single ultrasonic signal vector has a substantial variance. Heretofore, a plurality of readings have been obtained and averaged to minimize the variance. While estimated tissue attenuation for establishing time gain control can be improved by such averaging, the resolution does not improve image display.

The present invention is directed to obtaining and averaging a plurality of measurements of attenuation for a limited volume of tissue. In obtaining the plurality of measurements, ultrasonic waves are directed through the limited volume along a plurality of vectors, and the attenuation for the limited volume is calculated for each vector using a measure of frequency shift to determine attenuation. Establishing the total tissue attenuation based on a plurality of limited volumes using a plurality of vectors is similar to the tomograph reconstruction of a section of tissue.

A feature of the invention is the use of a plurality of ultrasonic wave vectors intersecting a limited volume of tissue to obtain measures of attenuation of the limited volume.

However, it has been observed that a simple monotonically decreasing shift in frequency as predicted by attenuation alone does not always occur. A significant variation in frequency shift can be noted due to a preferential frequency effect. If this shift in frequency is detected adequately, then the shift itself may be used to characterize the interrogated tissue. In addition, these perturbations can bias the tissue attenuation derived from analysis of the frequency shift of the reflected waves.

Another object of the present invention is an improved method of detecting and determining variations in frequency dependent scatter properties of biologic tissues based on a frequency shift of reflected ultrasonic signals.

A feature of the invention is the use of a frequency dependent factor for characterizing the scattering of energy preferentially at different frequencies.

Briefly, in accordance with the invention frequency domain characteristics of a wave are determined from an analysis of temporal features of the wave. The temporal features are detected and a histogram thereof is established. The histogram can then be correlated to the frequency domain characteristics. For example, a histogram of zero crossings is correlated to the second moment in the frequency domain, and a histogram of wave maxima per unit of time is correlated to the fourth moment in the frequency domain.

In accordance with the invention ultrasonic wave attenuation at different levels of tissue under examination is established by a time domain analysis, and the attenuation coefficients are then used to establish a time gain control signal for use in amplifying reflected ultrasonic waves.

A feature of the invention is the use of a plurality of ultrasonic signal vectors for obtaining a measure of attenuation versus depth in tissue under examination.

In accordance with one embodiment of the invention a method of predicting the frequency dependent attenuation in tissue comprises the steps of transmitting an ultrasonic signal into the tissue, receiving a reflected signal, and determining the number of zero crossings of the reflected signal as a function of depth in the tissue. By comparing the number of zero crossings at one depth to the number of zero crossing at a second depth a measure of attenuation in the tissue between the first depth and the second depth is obtained.

More particularly, the zero crossing density of an ultrasonic wave at different levels within the tissue under examination is established, and the frequency dependent attenuation of the tissue between levels is established by comparing the density count at one level to the density count at a second level. By thus establishing the ultrasonic attenuation through the tissue sample a more accurate time gain control signal is established for the scanning apparatus. Alternatively, other repetitive features such as wave maxima are identified and a histogram of the features is established from which a frequency domain moment is determined by correlation.

Apparatus for determining the number of zero crossings in the reflected ultrasonic signal comprises a monostable multivibrator having an input and an output, means for receiving the reflected ultrasonic wave and triggering the monostable multivibrator, and means connected to the output for measuring the output pulses of the monostable multivibrator. In a preferred embodiment the trigger comprises a Schmitt trigger circuit and the means for measuring the output pulses comprises charge storage means. Thus, the accumulated charge in the reflected signal from the first depth is subtracted from the measure of accumulated charge of the reflected signal at the second depth to determine frequency dependent attenuation of the tissue between the first and second depth.

The invention and objects and features thereof will be more readily apparent from the following detailed description and appended claims when taken with the drawing, in which:

Figure 1 is a functional block diagram of an ultrasonic scanning system.

Figure 2 is a functional block diagram of apparatus useful in establishing ultrasonic attenuation in tissue under analysis, particularly for counting zero crossings and determining frequency dependent attenuation in accordance with the invention.

Figure 3 is a plot of a simulated reflected ultrasonic signal of tissue and the zero crossing density for the signal versus sample depth.

Figure 4 is an actual plot of a reflected ultrasonic signal from an animal kidney and the zero crossing density for the reflected signal versus depth in the kidney.

Figure 5 is a plot of signal power spectra versus frequency.

Figures 6A-6C are plots of frequency spectra of a pulse, noise, and a reflected signal versus frequency.

Figure 7 is a plot of frequency spectra moments and zero crossing data for an ultrasonic signal.

Figure 8 is a functional block diagram of apparatus in accordance with the invention for obtaining averaged values of zero crossing densities as a function of tissue depth.

Figures 9A-9C are curves of zero crossing densities versus tissue depth illustrating the method in accordance with the invention.

Figures 10-12 are schematic illustrations of transducer means as used to obtain a plurality of vectors intersecting a limited volume of tissue in accordance with the invention.

Figure 13 is a schematic illustrating the use of vectors for determining ultrasonic wave attenuation of tissue in accordance with the invention.

Figure 14 is a plot of frequency versus tissue depth based on assumed monotonically decreasing frequency shift.

Figure 15 is a plot of frequency versus tissue depth including a region of increased frequency due to a change in scatter properties of the tissue in that region.

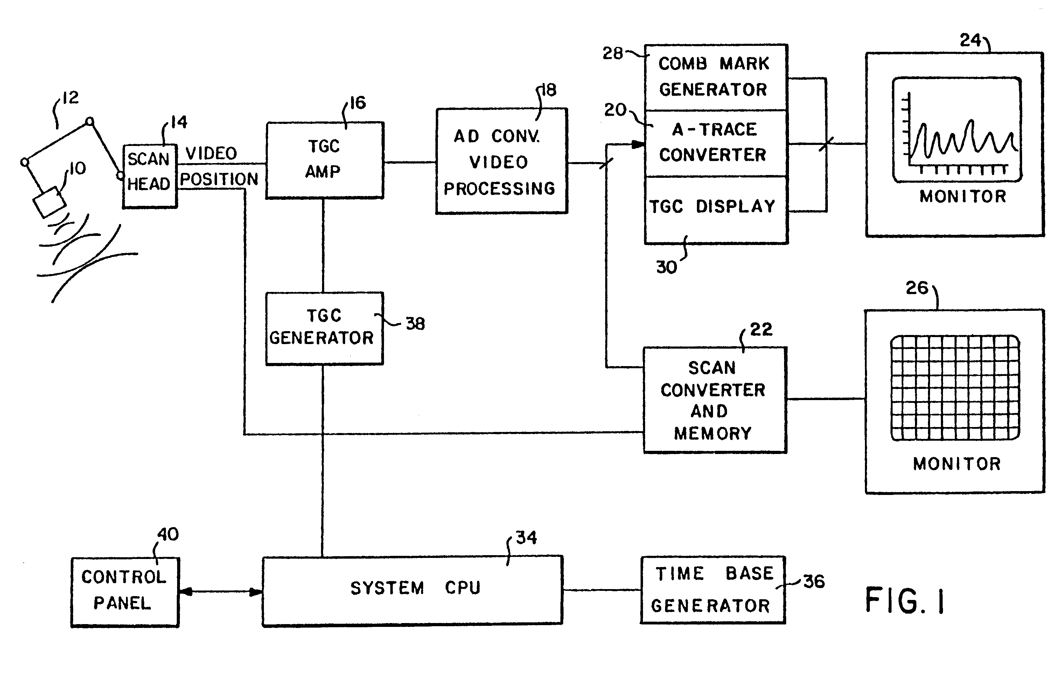

Referring now to the drawings, Figure 1 is a functional block diagram of an ultrasonic scanner. In this embodiment the system includes a transducer 10 mounted on a hinged arm system shown generally at 12 whereby transducer

10

10 can move freely in a single plane. Potentiometers in scanhead 14 and associated with the arms of the system generate signals indicative of the X and Y position of the scanner 10 in the plane of motion.

Transducer 10 transmits ultrasonic signals (e.g. on the order of 2 megahertz) and generates electrical signals in response to reflections of the transmitted ultrasonic signals. The generated signals are attenuated in time due to attenuation of the ultrasonic signal in passing through a patient.

The attenuated video signal is then applied to a variable gain amplifier 16, and the amplified signal is then applied to analog to digital conversion and video processing circuitry 18. The output of circuitry 18 is then applied to A-trace converter circuitry 20 and to scan converter and memory circuitry 22 which generate the signals for controlling television monitors 24 and 26, respectively.

The A-trace converter generates a signal for real time display of the amplitude of each reflected ultrasonic wave. The A trace data applied to monitor 24 identifies a horizontal position on the monitor (e.g. 512 positions) and an amplitude or vertical position associated with each X position. This data controls the intensity of the electron beam in the display during raster line scanning by the beam. Scale markings for the displayed A-trace are generated by comb mark generator 28, and a time gain compensation curve is provided by generator 30.

11

A section view of the patient is displayed on monitor 26 in response to the scan converter and memory 22. The signal from circuitry 18 is converted for storage in a 512 x 512 memory matrix with each point in the matrix accommodating a 5 bit brightness code. The matrix corresponds to the pixels on the display of monitor 26 with the brightness code being indicative of the Gray-scale for the pixels.

System control is provided by a central processing unit 34 which also controls a time base generator 36 which generates the timing signals for the system. A time gain compensation (TGC) control generator 38 generates the control signals for amplifier 16 and a control panel 40 is provided for manual control of the system through the cental processing unit.

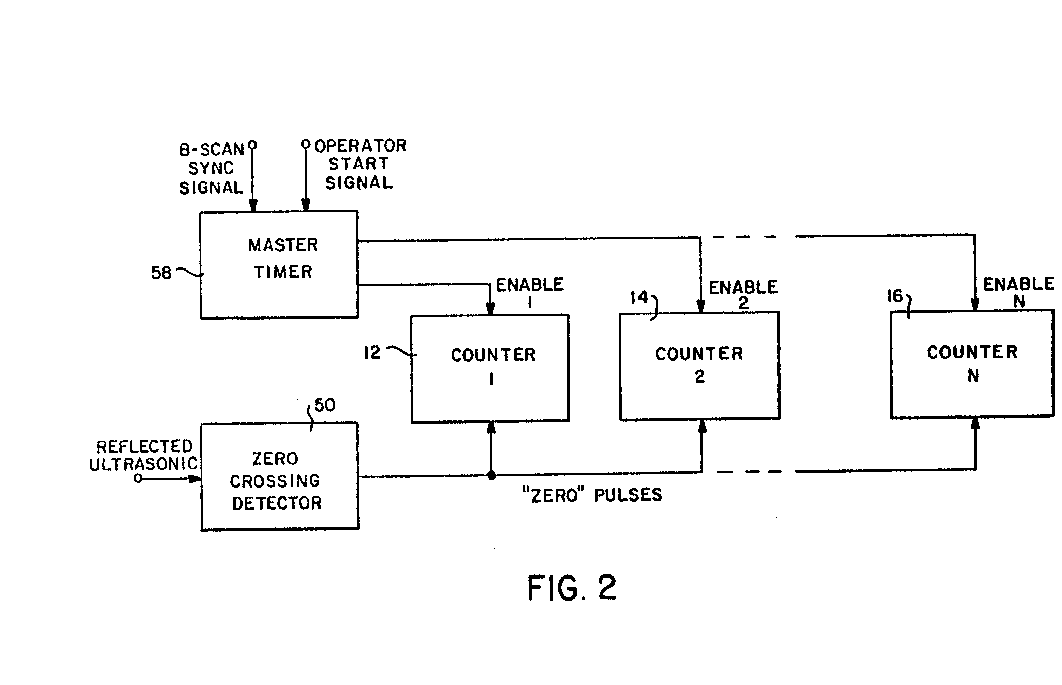

Figure 2 is a functional block diagram of apparatus in accrodance with the invention for implementing the measurement of zero crossing density in which a reflected ultrasonic signal from tissue under examination is applied to a zero crossing detector 50. The detector 50 preferably comprises a monostable multivibrator which is triggered by a Schmitt trigger whereby a pulse is generated in response to each zero crossing of the reflected signal. Such a Schmitt trigger and monostable multivibrator is commercially available, for example the Texas Instruments 74221 integrated circuit device. The output of the detector 50 is a series of pulses which are then connected to a plurality of counters such as counter 1, counter 2, ---counter N. In a preferred embodiment each counter is a conventional pulse counter. Alternatively, each counter can comprise capacitive means for storing charge in response to the pulses.

0092191

12

A master timer 52 controls each of the counters whereby a count is accumulated for a specific interval of time corresponding to a depth in the tissue under examination. The master timer receives an operator start signal and a sync signal from the ultrasonic scanner, and enable signals are then generated for each of the counters based on the time of flight of an ultrasonic wave in the tissue under examination and the depth of the tissue from which zero crossings for reflected signals are to be counted.

By comparing the count at one level to the count at another level an estimate of the frequency dependent attenuation of an acoustic wave therebetween is established. By so establishing the attenuation throughout the tissue under examination a more accurate means of quantifying tissue attenuation is then achieved. In particular a more accurate time gain control signal is established for the time gain compensated amplifier in the ultrasonic scanning apparatus.

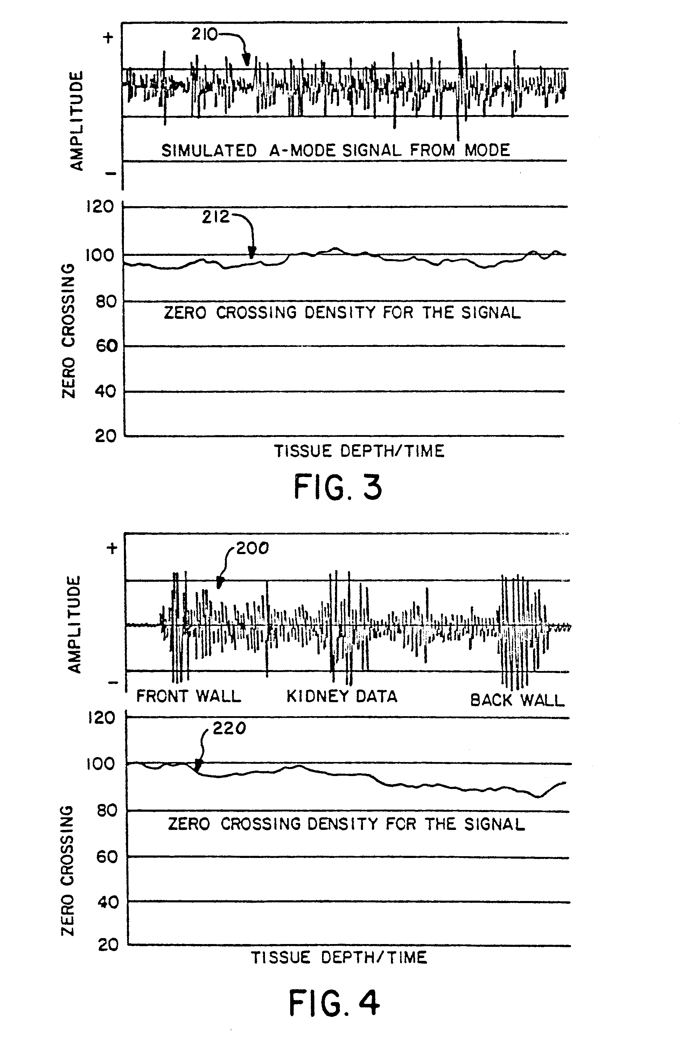

Figure 3 is a plot of a computer simulated ultrasonic signal as may be reflected by human tissue and the zero crossing density of the signal as a function of tissue depth. The signal shown generally at 210 is a complex waveform which varies with depth in the tissue thus indicating the randomness in the tissue scatter. Below the simulated ultrasonic wave is a plot of the zero crossings density of the complex wave at various depths in the tissue. From the curve 212 it is seen that the zero crossing density varies from approximately 90 to 105 at the various depths. However, the mean value is constant, indicating no net change in the expected density of zero crossings.

Figure 4 is a similar plot of an actual reflected ultrasonic signal 200 from the kidney of an animal showing attenuation of the signal from the front wall to the back wall. Again, the zero crossing density curve 220 varies from approximately 85 to slightly above 100 from the back wall to the front wall of a kidney. Now, however, there appears to be an average decrease in zero crossings per time as a function of depth.

As above described, the zero crossing density of the reflected ultrasonic wave is an indicia of the frequency spectrum of the reflected wave at different levels in the tissue. Thus, in accordance with the invention the frequency dependent attenuation of an ultrasonic signal of the tissue between first and second levels in the tissue can be readily determined by comparing the zero crossing density at the first level to the zero crossing density at the second level. Determining the actual spectral resolution of the reflected ultrasonic wave, and the attendant difficulties associated therewith, is obviated.

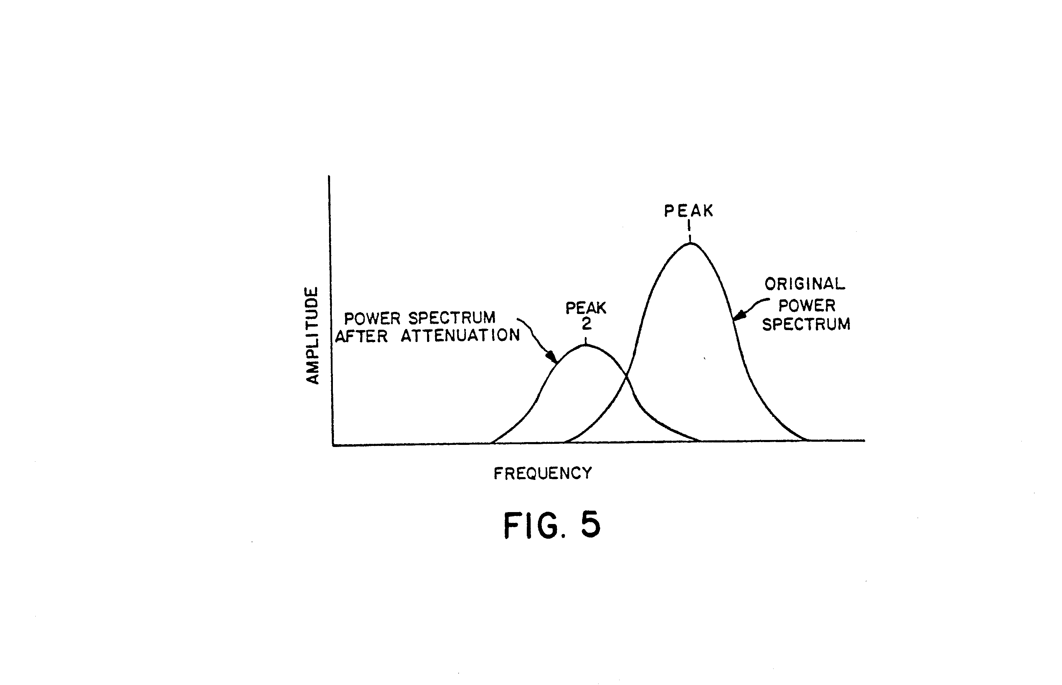

The theoretical relationship of the attenuation coefficient of tissue to the zero crossing density of the returned ultrasonic signal is based on the theoretical relationships described by S. O. Rice in "Mathematical Analysis of Random Noise", Bell System Technical Journal 23, 24, Pages 1-162, 1944 and 1945 and Dines and Kak, "Ultrasonic Attenuation Tomography of Soft Tissues", Ultrasonic Imaging, Vol. 1, No. 1, Pages 16-33, 1979. According to the Dines and Kak paper if the spectrum of an ultrasonic pulse is Gaussian in shape then frequency selective attenuation will merely produce a downward translation of the spectrum with depth, leaving the spectral shape unchanged. This is shown in Figure 5 as follows. Assuming a signal power spectrum of

$$x(f) = a_o e^{-(f-f_o)^2/2\sigma^2} \qquad (1)$$

and an attenuation term

$$\alpha(f) = e^{-\alpha_o f\ell} \qquad (2)$$

where $a_o$ is an amplitude constant, $f$ = frequency, $f_o$ = center frequency of the spectrum, $\alpha_o$ the relative attenuation, and $\ell$ = the propagation path length. It should be noted that equation 2 makes the assumption the attenuation is linearly related to frequency. While this is true for tissue, the invention is not limited to linear dependence of frequency on attenuation. The resulting signal spectrum is the product of 1 and 2.

Hence,

$$S(f) = \alpha(f) \cdot x(f)$$

$$= a_o e^{-\alpha_o f\ell} e^{-(f-f_o)^2/2\sigma^2}$$

$$= a_o e^{-[f^2 - 2ff_o + 2\alpha_o\sigma^2 f\ell + f_o^2]/2\sigma^2}$$

The center of this spectrum can be found by finding the minimum of the term being exponentiated. Therefore, taking the derivative with respect to f and setting it equal to 0, one obtains

$$\frac{d}{df} [\; f^2 - 2ff_o + 2\sigma^2\alpha_o f\ell + f_o^2 \;] = 2f - 2f_o + 2\sigma^2\alpha_o f\ell = 0$$

or

$$f_{peak} = f_o - (\sigma^2\alpha_o\ell)$$

It is seen that the peak of the Gaussian spectrum simply slides linearly toward lower frequencies as a function of $\alpha_o$ and $\ell$. Since the spectral shape is constant, a good estimate of $\alpha_o$ can be obtained simply by finding the center of the Gaussian shape.

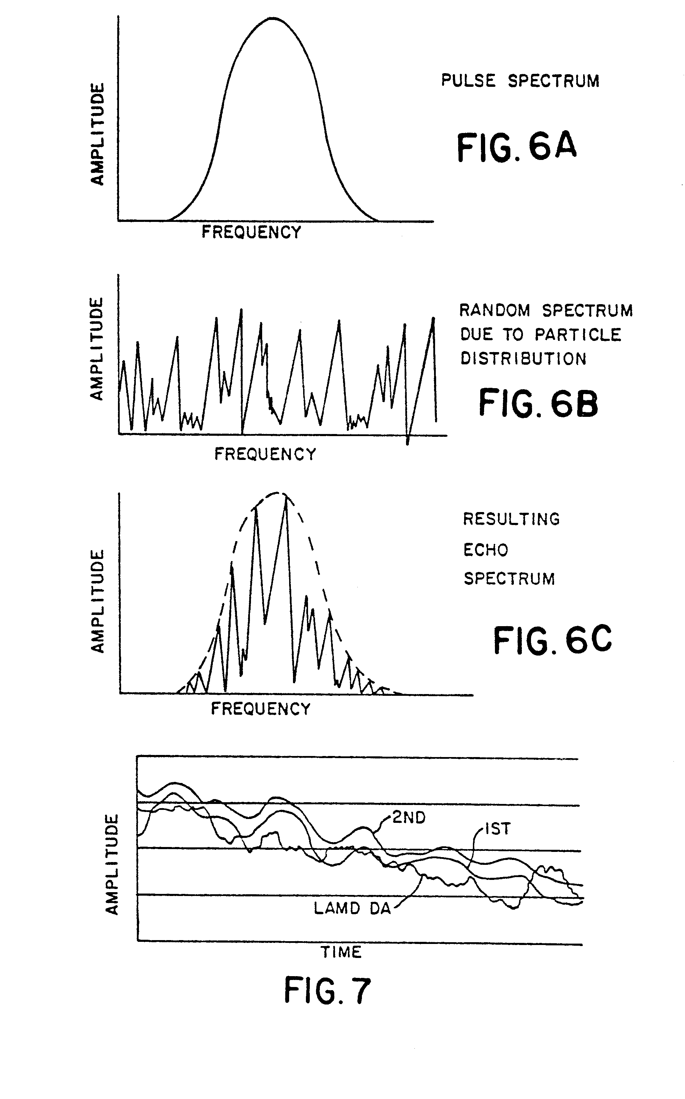

If it is assumed that the pulse is propagating through a random inhomogeneous medium such as tissue, the energy from the pulse will be scattered at random. Mathematically this is equivalent to convolving the pulse with a series of random impulses. In the frequency domain it will then be equivalent to multiplying the spectrum S(f) by a random noise power spectrum. Hence one will get the Gaussian envelope modulated by Noise. This is shown in Figure 6A-6C. There no longer will be a "clear" Gaussian function to work with but rather one must estimate where the center is with a statistical evaluation. One obvious method would be to look for the first moment or "mean" of the spectrum as a good approximation to the center of the Gaussian shape. Mathematically this is:

16

$$\text{First Moment} = \frac{\int_{0}^{\infty} f S(f)\, df}{\int_{0}^{\infty} S(f)\, df}$$

Now, from Rice's work, the average zero crossings density per time for a band limited signal is estimated by the square root of second moment of the power density spectrum.

Hence

$$\lambda \approx 2 \cdot \left[ \frac{\int_{0}^{\infty} f^2 S(f)\, df}{\int_{0}^{\infty} S(f)\, df} \right]^{1/2}$$

For spectral functions not close to the origin it can be shown qualitatively that the square root of the second moment is approximately equal to the first moment.

Thus,

$$\lambda \cong 2 \cdot \left[ \frac{\int_{0}^{\infty} f^2 S(f)\, dt}{\int_{0}^{\infty} S(f)\, df} \right]^{1/2} \cong f_{peak} = f_o - (\alpha_o \sigma^2 \ell)$$

or

$$\lambda \text{ is proportional to } (\alpha_o \ell)$$

An example of this can be shown using an A-mode digitized waveform from a Datason system using an RMI graphite gel phantom. Figure 7 is a plot comparing the first moment, the square root of the second moment and the zero crossing data. The first and second moments were calculated using Fourier Transform data and the zero crossing data was obtained directly from the A-mode signal. Thus, it is seen that the zero crossing density curve fairly tracks the first and second moment data.

There has been described an improved and simple method and means for determining frequency domain characteristics of a wave by an analysis of temporal features of the wave such as in determining frequency dependent attenuation of an ultrasonic wave in a body. A histogram of zero crossings is indicative of the second moment in the frequency domain, and the number of wave maxima per unit of time is indicative of the fourth moment in the frequency domain. Other histograms such as the distribution of time intervals between zeros can be employed.

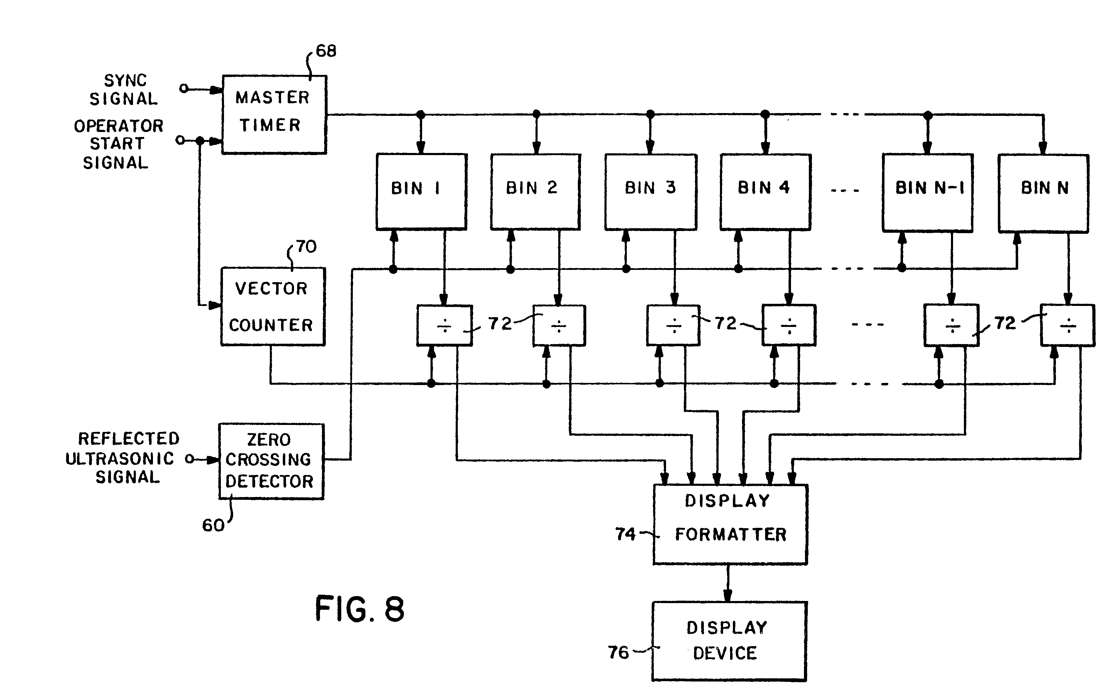

Figure 8 is a functional block diagram of apparatus in accordance with the invention for obtaining the averaged value of zero crossing densities as a function of tissue depth.

The circuitry is similar to the circuitry of Figure 2 with the reflected ultrasonic signal being applied to a zero crossing detector 60 with the count of the zero crossing vector being accumulated in bins 1, 2, 3 --- N-1 and N as indicated. However, a plurality of signal vectors are generated with each vector applying a sync signal to the master timer 68. The number of vectors is counted by a vector counter 70, and the count of counter 70 controls a plurality of dividers 72 which receive the accumulated count from each of the bins and derives an average value by dividing the accumulated count by the number of vectors. The averaged value from each of the bins is then applied to a display formatter 74 for controlling a display device such as a video display 76.

Thus, an operator of the system can make a visual judgment as to how reliable the measurements are by viewing the display to determine how quickly the data converges to an acceptable value.

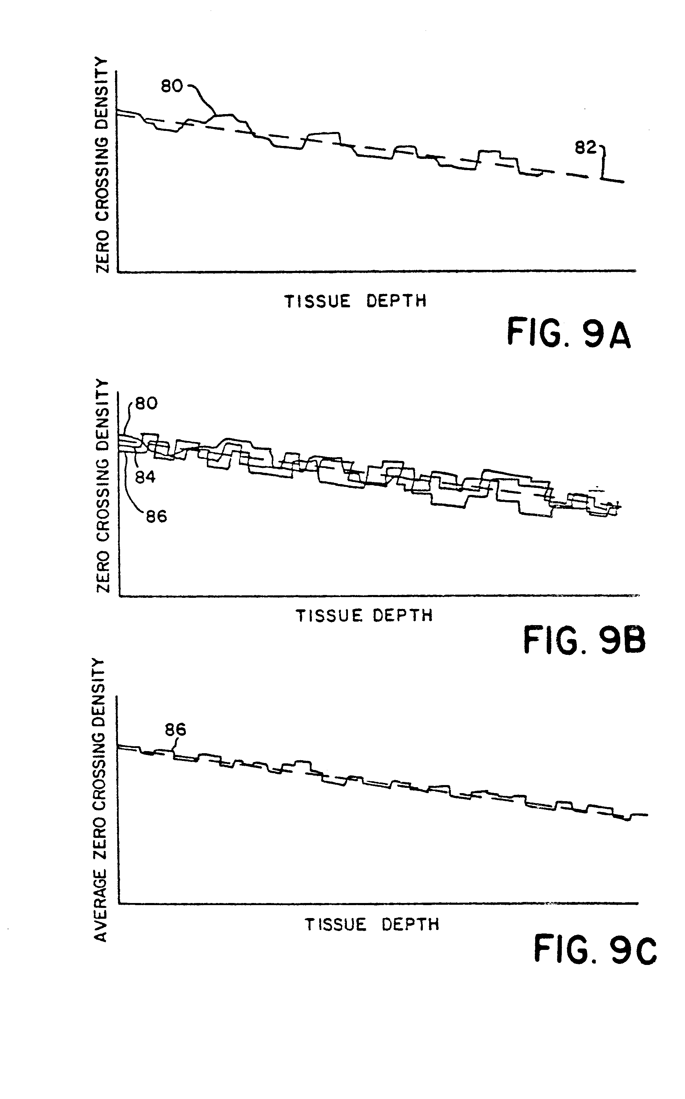

The convergence of the data, as viewed on the display, is further illustrated in Figures 9A-9C which are curves of the zero cross densities versus tissue depth showing the convergence of the data. In Figure 9A the measured zero crossing density for a single vector is plotted as the curve 80. The theoretical value of the decreasing zero crossing densities with tissue depth is illustrated by the dotted line 82. It is thus seen that the measured value has a number of incremental variances associated therewith. Figure 9B is a composite of three vectors including vector 80, vector 84, and vector 86. Each of the vectors generates a count with the total count accumulated in the bins 1 --- N of Figure 8. Figure 9C is the averaged value of the three vectors plotted as curve 88 and it will be noted that the incremental variances of curve 88 are significantly reduced from the incremental variances of the individual vector curves 80, 84, and 86. As the number of vectors increases, a more accurate measure of the actual zero crossing curve is thus obtained.

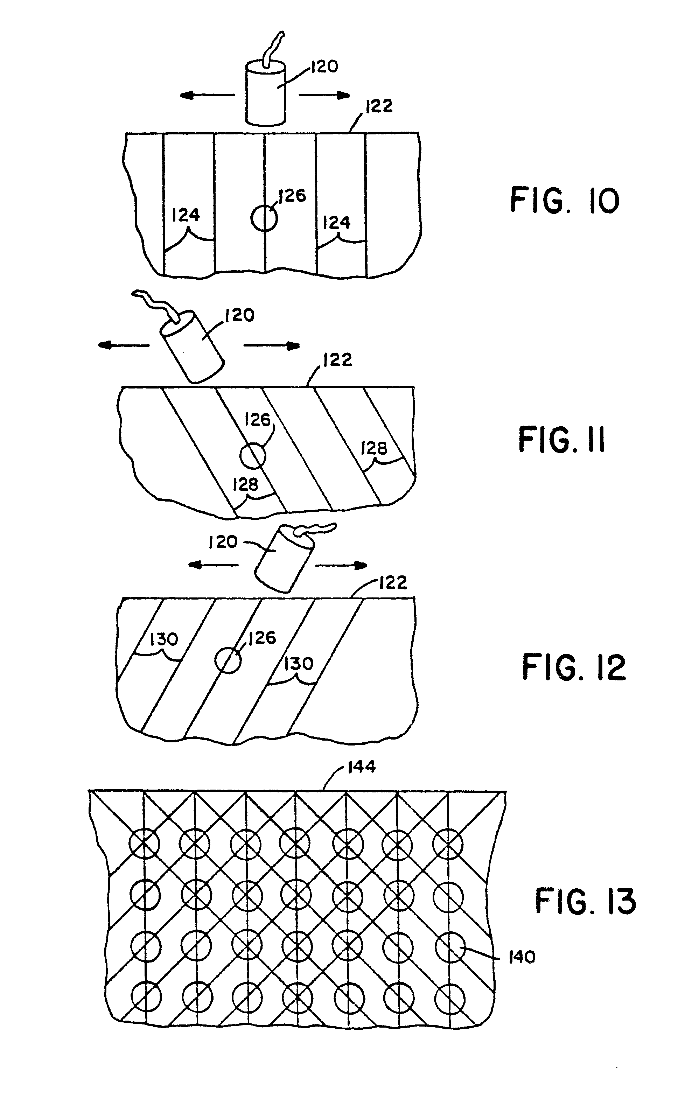

Figures 10-12 are schematics illustrating transducer means as used to obtain a plurality of vectors intersecting a limited volume of tissue in accordance with the invention. In Figure 10 the transducer 120 is oriented perpendicular to the surface 122 of tissue under examination, and readings are obtained for a plurality of vectors 124 oriented perpendicular to the surface 122. As illustrated, one of the vectors intersects a limited area of tissue 126, and using the technique of Figure 2, a measure of the ultrasonic attenuation of the limited volume 126 is obtained from an analysis of the zero crossings of a reflected ultrasonic wave.

In Figure 11 the transducer 120 is oriented at an angle $\theta$ from the perpendicular, and again readings are obtained for a plurality of vectors 128 which are oriented at the angle $\theta$ with respect to the surface 122. One vector intersects the limited volume 126, and again a measure of the ultrasonic attenuation of the limited volume is obtained by analysis of the frequency shift of a reflected ultrasonic signal for the one vector.

In Figure 12 the transducer 120 is tilted at angle to the perpendicular and readings for a plurality of vectors 120 are tilted at the angle $\theta$ with respect to the surface are obtained. Again, one vector intersects the limited volume 126, and a third measure of the attenuation of the limited volume 126 is obtained from an analysis of the reflected ultrasonic signal along this vector.

Three measures of the ultrasonic attenuation of the limited volume 126 have now been obtained, and an average of the three measures of attenuation provide a more accurate determination of the attenuation of the limited volume. It will be appreciated that additional readings can be obtained and averaged to further improve the accuracy of the determined attenuation of the limited volume.

Figure 13 is a schematic illustration of use of the invention in obtaining the attenuation of the entire tissue by obtaining the attenuation of a plurality of limited volumes 140 as described above using sets of parallel vectors at different inclinations with respect to the surface 144 of the tissue. Such a reconstruction of the plurality of areas within the tissue is similar to the computed tomographic reconstruction of an area, which is well known in the art.

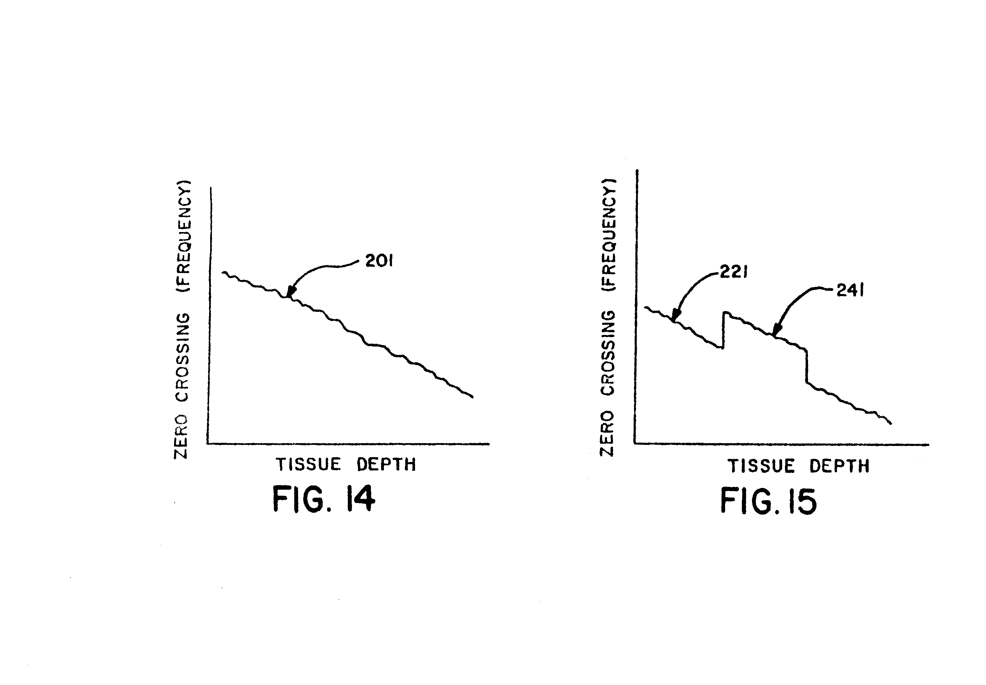

Figure 14 is a plot 201 of zero crossings (e.g. frequency) versus tissue depth as may be expected assuming a monotonically decreasing frequency shift. The longer the refelction path length of an ultrasonic wave the lower will be the zero crossing count or frequency of the detected wave.

Figure 15 is a plot of zero crossings or frequency versus depth as is sometimes observed. It is noted that in the intermediate region 241 of the curve 221 the zero crossings and frequency takes an abrupt increase. Such an increase is not readily comprehended based on the assumption that a monotonically decreasing shift in frequency should occur in the tissue. It is known, however that a significant variation in frequency shift results from scatter perturbations or a preferential frequency effect rather than to a change in attenuation.

In accordance with this principle a frequency dependent term is multiplied by the scatter equation such that the scatterers reradiate energy preferentially at different frequencies. This is a well known phenomenon and is expressed as a term $(f^z)$ where f is frequency and z is a coefficient ranging from zero (for specular reflectors) to four (for Rayleigh scatter). Thus the scatter equation becomes

$$|y(f)|^2 = (f^z)(e^{-\alpha_0 \ell f})(e^{-f-f_0})^2/2\sigma^2)|\hat{A}(f)|^2 \qquad (1)$$

where $(e^{-\alpha_0 \ell f})$ is the attenuation term, $e^{-(f-f_0)}/2\sigma^2$ is the spectral envelope of the transducer, and $|A(f)|^2$ is the random scatter variable depicting noise modulation. The exponential terms can be combined and the square completed to determine how the spectrum changes as a function of $\ell$. A similar procedure is performed for the $f^z$ term. Accordingly, the following approximation using three term Taylor expansion is derived:

$$f^z = e^{\ln(f^z)} = e^{z\ln(f)} \cong e^{z[\ln(f_0) +}$$

$$(f-f_0)/f_0 - (f-f_0)^2/2f_0^2]} \qquad (2)$$

This term can be taken inside the expansion as follows:

$$|y(f)|^2 = |\hat{A}(f)|^2 e^{-\left[ [(f^2-2ff_0+f_0^2)/2\sigma^2] - \right.}$$

$$[\alpha_0 \ell f] + [z\ln(f_0) +$$

$$\left. z(f-f_0)/f_0 - z(f-f_0)^2/2f_0^2] \right]} \qquad (3)$$

22

By differentiating the exponential as a function of f and setting the differential equal to zero, the maximum amplitude or center frequency is determined. Thus, solving for the center frequency yields

$$f_{center} = \left[\frac{f_0^2}{f_0^2 - z\sigma^2}\right]\left[f_0 + (2z\sigma^2/f_0) - \alpha_0\sigma^2 \ell\right] \quad (4)$$

Without the $(f^2)$ term one would expect to find

$$f_{center} = (f_0 - \alpha_0\sigma^2\ell) \quad (5)$$

Thus, if $z\sigma$ is small compared to $f_0$, a change of z -1 to 2, for example, does not change the term $[f_0^2/(f_0^2 - z\sigma^2)]$ very much.

However, the term $(2z\sigma^2/f_0)$ can produce a sizeable change in frequency.

The $(-\alpha_{o} \sigma^{2} \ell)$ term always produces a monotonically decreasing center frequency (with random perturbations added to the otherwise linear function). If, however, a region of tissue is traversed which has an elevated z value, then there will be corresponding actual frequency shift upwards. This is the effect illustrated in Figure 15. By averaging many scans between the two adjacent scatter regions it is possible to ascertain whether or not the change is real or a statistical aberration. Determining these shifts is then a valid way of characterizing differences in tissue using diagnostic ultrasound techniques.

By introducing the frequency dependent scatter factor, $f^{z}$, in the determination of the frequency of reflected signals, as described, a means of characterizing the frequency dependence of scatter is obtained. Accordingly, this frequency dependent scatter factor may be used to characterize the tissue being investigated. In addition, correcting for this factor will result in a more accurate attenuation measurement.

While the invention has been described with reference to a specific embodiment the description is illustrated of the invention and is not to be construed as limiting the invention. Various modifications and applications may occur to those skilled in the art without departing from the true spirit and scope of the invention as defined by the appended claims.

Claims

1.    A method of determining frequency domain characteristics of a wave by time domain analysis characterized by the steps of detecting a time domain characteristic of said wave, and comparing the detected time domain characteristics during one interval of time with the detected time domain characteristics during a second period of time thereby determining frequency domain characteristics of said wave.

2.    A method according to claim 1 characterized by the steps of identifying a repetitive feature of the time domain wave, establishing a histogram of said repetitive feature, and correlating said histogram to a frequency domain moment.

3.    The method as defined by claims 1 or 2 wherein said time domain characteristic is zero crossings of said wave.

4.    The method as defined by claim 2 wherein said frequency domain characteristic is the second moment.

5.    The method as defined by claim 2 wherein said feature is wave maxima.

6.    A method according to claims 1 or 2 characterized in that the steps establish a time gain control signal for a time compensated amplifier in an ultrasonic scanning system.

7. A method according to claim 6 characterized by the steps of establishing ultrasonic attenuation at different levels in an object under examination and constructing a time gain control signal based on said attenuation.

8. The method as defined by claim 7 wherein the step of establishing ultrasonic attenuation at different levels in an object comprises the steps of transmitting an ultrasonic wave into said object, receiving a reflected ultrasonic signal from said object, detecting the zero crossing of said reflected ultrasonic wave, and establishing the zero crossing density of said ultrasonic wave at different levels in the object under examination.

9. The method as defined by claim 8 characterized by further including the step of comparing the zero crossing density at one level to the zero crossing density at another level to determine the ultrasonic attenuation between the first level and the second level.

10. A method of predicting the frequency dependent attenuation in tissue characterized by the steps of

transmitting an ultrasonic signal to the tissue, receiving a reflected signal,

determining the number of zero crossings of said reflected signal at a first depth in the tissue and at a second depth in the tissue, and

comparing the measure of zero crossings at the first depth to the measure of zero crossings at the second depth to obtain a measure of the ultrasonic wave attenuation in the tissue between said first depth and said second depth.

0092191

3

11.     The method as defined by claim 10 wherein said step of comparing includes subtracting the measure of zero crossings at the first depth from the measure of zero crossings at the second depth.

12.     A method according to claims 1 or 2 for determining ultrasonic wave attenuation of tissue characterized by the steps of
        transmitting a plurality of ultrasonic waves into said tissue,
        receiving reflected ultrasonic waves from the tissue,
        detecting the frequencies of said reflected ultrasonic waves as reflected from various depths in said tissue,
        averaging the frequencies from said reflected waves reflected from said various depths in said tissue, and
        determining tissue attenuation from the averaged frequencies from said various depths.

13.     The method as defined by claim 12 wherein said step of detecting the frequencies of said reflected waves includes detecting and counting zero crossing densities of said reflected waves.

14.     The method as defined by claim 13 wherein said step of determining tissue attenuation includes comparing the averaged zero crossing density at a first depth to the averaged zero crossing density at a second depth to determine the ultrasonic attenuation between said first depth and said second depth.

15. A method according to claims 1 or 2 for determining ultrasonic wave attenuation of tissue characterized by the steps of

directing an ultrasonic wave along a first vector through a limited volume of tissue,

detecting the frequency shift of a reflection of said ultrasonic wave along said first vector,

determining a first measure of attenuation of said limited volume of tissue from said detected frequency shift along said first vector,

directing an ultrasonic wave along at least a second vector through said limited volume of tissue,

detecting the frequency shift of a reflection of said ultrasonic wave along said second vector,

determining a second measure of attenuation of said limited volume of tissue from said frequency shift along sid second vector, and

averaging said first measure and said second measure.

16. The measure as defined by claim 15 wherein said steps of detecting the frequency shift include counting zero crossings of the reflected waves.

17. The method as defined by claim 15 or 16 characterized by further including repeating all steps for a plurality of limited volumes of tissue.

18. A method according to claims 1 or 2 for determining the frequency dependence of scatter within a biologic tissue characterized by the steps of transmitting a plurality of ultrasonic waves into said tissue, receiving reflected ultrasonic waves from the tissue, detecting the frequencies of said reflected ultrasonic waves from various depth in said tissue, detecting shifts in said frequencies that are larger than can be accounted for via statistical variation and attenuation alone, and determining the frequency dependence of scatter based on said shift.

19. A method according to claims 1 or 2 for dertermining attenuation of tissue to ultrasonic energy characterized by the steps of directing an ultrasonic signal into said tissue, detecting reflected ultrasonic signals, identifying frequency dependent scatter perturbations in said reflected ultrasonic energy, characterizing said perturbation from said detected signals, and determining tissue attenuation from said detected signals after correcting for said perturbations.

20. The method as defined by claim 19 characterized in that the step of detecting reflected ultrasonic signals includes determining the frequency of said reflected ultrasonic signals.

21. The method as defined by claims 19 or 20 characterized in that the step of determining the frequency of said reflected ultrasonic signals includes determining the zero crossings of said reflected ultrasonic signals.

22. Apparatus for determining frequency domain characteristics of a wave by time domain analysis characterized by

means for detecting a time domain characteristic of the wave and

6

means for comparing the detected time domain characteristics during one interval of time with the detected time domain characteristics during a second period of time to thereby determine frequency domain characteristics of the wave.

23.    Apparatus according to claim 22 characterized by means for identifying a repetitive feature of the time domain wave, means for establishing a histogram of the repetitive feature, and means for correlating the histogram to a frequency domain characteristic.

24.    Apparatus according to claims 22 or 23 characterized in that the frequency domain characteristic is a frequency domain moment.

25.    Apparatus according to claims 22 or 23 characterized by a monostable multivibrator having a trigger input and a pulse output, means for receiving said reflected ultrasonic wave and applying a trigger signal to the input of said monostable multivibrator, and means connected with said output for measuring the output pulses from said monostable multivibrator.

26.    Apparatus as defined by claim 25 wherein said means for applying a trigger signal comprises a Schmitt trigger circuit.

27.    Apparatus as defined by claim 25 or 26 wherein said means for measuring output pulses comprises charge storage means.

28. Apparatus according to claim 22 or 23 characterized in that a time gain compensated amplifier amplifies the reflected wave signal for the amplifier comprising means for identifying a repetitive feature of a reflective wave, means for establishing a histogram of said repetitive feature, and means for correlating said histogram to a frequency domain moment.

29. Apparatus as defined by claim 28 wherein said repetitive feature is zero crossings of said reflected wave.

30. Apparatus as defined by claim 25 or 26 wherein said means for measuring output pulses comprise pulse counters.

31. Apparatus as defined by claim 28 wherein said repetitive feature is zero crossings of said reflected wave.

32. An ultrasonic scanning system according to claims 22 or 23 for determining ultrasonic wave attenuation in tissue under examination characterized by
    transducer means for transmitting ultrasonic waves into said tissue,
    detector means for receiving reflected ultrasonic waves and detecting the frequencies thereof as reflected from various depths in said tissue,
    counting means for counting the detected frequencies at said various depths and obtaining an average thereof, and
    display means for displaying the averaged frequencies at said various depths.

8

33. Apparatus as defined by claim 32 wherein said detector means includes means for identifying a repetitive feature of said reflected waves.

34. Apparatus as defined by claim 33 wherein said means for identifying a repetitive feature comprises a zero crossing detector.

35. Apparatus as defined by claim 32, 33 or 34 wherein said counting means comprises a plurality of memory bins for accumulating measures of said detected frequencies, each memory bin corresponding to a depth in said tissue, and divider means for dividing the accumulated measures in said memory bins by the number of transmitted ultrasonic waves.

FIG. I

EP 83 103 645.4

0092191

FIG. 2

B-SCAN SYNC SIGNAL

OPERATOR START SIGNAL

58 — MASTER TIMER

12 — COUNTER 1

ENABLE 1

14 — COUNTER 2

ENABLE 2

16 — COUNTER N

ENABLE N

REFLECTED ULTRASONIC

50 — ZERO CROSSING DETECTOR

"ZERO" PULSES

0092191

AMPLITUDE

SIMULATED A-MODE SIGNAL FROM MODE

210

212

ZERO CROSSING

ZERO CROSSING DENSITY FOR THE SIGNAL

TISSUE DEPTH/TIME

**FIG. 3**

AMPLITUDE

200

FRONT WALL    KIDNEY DATA    BACK WALL

220

ZERO CROSSING

ZERO CROSSING DENSITY FOR THE SIGNAL

TISSUE DEPTH/TIME

**FIG. 4**

FIG. 5

PULSE SPECTRUM

FIG. 6A

RANDOM SPECTRUM
DUE TO PARTICLE
DISTRIBUTION

FIG. 6B

RESULTING
ECHO
SPECTRUM

FIG. 6C

FIG. 7

0092191

FIG. 8

FIG. 9A

FIG. 9B

FIG. 9C

FIG. 10

FIG. 11

FIG. 12

FIG. 13

**FIG. 15**

ZERO CROSSING (FREQUENCY)

TISSUE DEPTH

241

221

**FIG. 14**

ZERO CROSSING (FREQUENCY)

TISSUE DEPTH

201